# EUROPÄISCHE PATENTSCHRIFT

(11) **EP 1 639 328 B1**
(45) Veröffentlichungstag und Bekanntmachung des Hinweises auf die Patenterteilung: **27.09.2006**
(21) Anmeldenummer: 04715285.5
(22) Anmeldetag: 27.02.2004
(51) Int. Cl.: G01G 23/01

(54) **VERFAHREN UND VORRICHTUNG ZUM KALIBRIEREN EINER WIEGEEINRICHTUNG, INSBESONDERE EINES WIEGEBUNKERS**
METHOD AND DEVICE FOR CALIBRATING A WEIGHING DEVICE, ESPECIALLY A WEIGHING HOPPER
PROCEDE ET DISPOSITIF POUR ETALONNER UN DISPOSITIF DE PESAGE, NOTAMMENT UNE TREMIE DE PESAGE

(30) Priorität: 04.04.2003 AT 5282003
(43) Veröffentlichungstag der Anmeldung: 29.03.2006
(73) Patentinhaber: Voest-Alpine Industrieanlagenbau GmbH & Co, 4031 Linz (AT)
(72) Erfinder: BEHAM, Karl-Heinz, A-3363 Hausmening (AT)
(74) Vertreter: Berg, Peter
(86) Internationale Anmeldenummer: PCT/EP2004/001996
(87) Internationale Veröffentlichungsnummer: WO 2004/088259

(56) Entgegenhaltungen:
- DE-U- 9 403 408
- GB-A- 1 542 643
- GB-A- 2 237 651
- PATENT ABSTRACTS OF JAPAN vol. 008, no. 278 (P-322), 19. Dezember 1984 (1984-12-19) & JP 59 143923 A (YOSHINORI KAMIHORIUCHI), 17. August 1984 (1984-08-17)

## Beschreibung

Die Erfindung betrifft eine Vorrichtung und ein Verfahren zum Kalibrieren einer Wiegeeinrichtung, insbesondere für einen Wiegebunker, mit zumindest einer Lastmesseinrichtung.

Im Bereich des metallurgischen Anlagenbaus finden Wiegeeinrichtungen zum Lagern und Dosieren von Prozessstoffen häufigen Einsatz. Aufgabe dieser Wiegeeinrichtungen ist es, durch Wiegen der Prozessstoffe eine quantitative Erfassung zu erreichen und auf Basis dieser Informationen die Zufuhr des jeweiligen Stoffes zu steuern.

Grundsätzlich basieren derartige Wiegeeinrichtungen auf Messungen durch beispielsweise Lastmesszellen, wobei unter Ausnutzung einer lokalen Deformation in der Messzelle auf die Last geschlossen wird. Derartige Lastmesszellen müssen für einen einwandfreien Betrieb kalibriert werden. Dazu ist es bekannt durch Anbringen genau definierter Massen eine bekannte Belastungssituation herzustellen. Auf Basis dieser Belastung können die Lastmesseinrichtungen kalibriert werden. Das bedeutet, dass eine Korrelation zwischen einer Belastung und einem durch eine Lastmesseinrichtung ermittelten Messwert hergestellt wird. Durch diese Korrelation kann eine eindeutige und quantitativ sichere Messung mittels der nun kalibrierten Lastmesseinrichtungen durchgeführt werden.

Die Ermittlung dieser Korrelation im Rahmen einer Kalibrierung wird üblicherweise während der Inbetriebnahme der Wiegeeinrichtung und dann wiederkehrend in genau definierten Zeitabständen durchgeführt. Diese Zeitabstände werden entsprechend den eingesetzten Messeinrichtungen und den verwendeten technischen Systemen gewählt, wobei diese zwischen einigen Wochen und etwa einem halben Jahr betragen können. Die Vereinfachung des Kalibrierungsprozesses bietet daher ein großes Verbesserungspotential.

Dabei ist insbesondere die Kalibrierung von Lastmesszellen im metallurgischen Anlagenbau, wo auch sehr große Massen gemessen und gesteuert werden müssen, schwierig, zeitintensiv und damit auch teuer. Aufgrund der benötigten sehr hohen Testmassen ergeben sich zeitaufwändige und schwierige Manipulationen für die Testmassen, die zur Kalibrierung der Lastmesszellen eingesetzt werden. Nachteilig sind auch die kosten- und anlagenintensiven Vorrichtungen, die zur Manipulation der Testmassen benötigt werden. Eine Vorrichtung zum Kalibrieren einer Wiegeeinrichtung mit einem krafteinstell baren Krafterzeugungsmittel ist aus GB-A-2237651 bekannt.

Es ist eine Aufgabe der Erfindung ein Verfahren und eine Vorrichtung zum Kalibrieren derart weiter zu entwickeln, dass eine wesentlich einfachere, kostengünstigere und sichere Lösung für die Kalibrierung von Wiegeeinrichtungen gefunden wird.

Diese Aufgabe wird entsprechend der erfindungsgemäßen Vorrichtung nach dem kennzeichnenden Teil des Anspruchs 1 und dem erfindungsgemäßen Verfahren nach dem kennzeichnenden Teil des Anspruchs 10 gelöst.

Insbesondere die Möglichkeit, durch das Krafterzeugungsmittel eine einstellbare Last aufzubringen, zeigt sich bei der Anwendung als vorteilhaft, da damit auch unterschiedliche Belastungszustände einer Wiegeeinrichtung simuliert werden können. Weiters kann durch das krafteinstellbare Krafterzeugungsmittel bei der Anwendung auf verschiedene Wiegeeinrichtungen die Last je nach Bedarf eingestellt werden.

Durch die erfindungsgemäße Lösung können aufwändige Testeinrichtungen eingespart werden und der Vorgang des Kalibrierens gelingt unter einem geringeren zeitlichen und finanziellen Aufwand.

Eine vorteilhafte Ausgestaltung der erfindungsgemäßen Vorrichtung sieht die Verwendung eines tragbaren Jochs vor. Dies gestattet eine rasche Verbindung des Krafterzeugungsmittels mit der Wiegeeinrichtung bzw. der Stahlkonstruktion der Einrichtung. Dazu werden Konsolen an der Stahlkonstruktion der Wiegeeinrichtung vorgesehenen, über die das Krafterzeugungsmittel in einfacher Art und Weise verbunden werden kann.

Die erfindungsgemäße Vorrichtung kann weiters zumindest eine Kalibrierdose umfassen, die im tragbaren Joch einsetzbar und dabei belastbar ist. Diese Erweiterung der erfindungsgemäßen Vorrichtung erlaubt im Zuge der Kalibrierung einen Vergleich der gemessenen Last an einer Lastmesszelle der Wiegeeinrichtungen mit der gemessenen Last an einer Kalibrierdose. Durch diese zusätzliche Messgröße gelingt eine besonders genaue und präzise reproduzierbare Kalibrierung. Dazu werden genaue und in ihrem Messbereich abgestimmte Kalibrierdosen, die auch einen Kalibrierschein umfassen, verwendet, sodass die aufgebrachten Lasten präzise erfasst werden und als Größen für die Kalibrierung herangezogen werden können.

Nach einer bevorzugten Ausführungsform der erfindungsgemäßen Vorrichtung wird diese lösbar mit der Wiegeeinrichtung verbunden ausgeführt. Dazu ist die gesamte erfindungsgemäße Vorrichtung derart gestaltet, dass diese bei Bedarf an die Wiegeeinrichtung, deren Messeinrichtung zu kalibrieren ist, montiert und die Kalibrierung durchgeführt wird. In Konsolen, die an der Wiegeeinrichtung bzw. an dessen Stahlkonstruktion vorgesehenen sind wird das Joch mit der Kalibrierdose eingehängt. Im Anschluss an die Kalibrierung erfolgt eine Demontage der erfindungsgemäßen Vorrichtung, sodass diese auch bei weiteren Wiegeeinrichtungen eingesetzt oder bei Bedarf erneut an der Wiegeeinrichtung angewendet werden kann.

Eine vorteilhafte Ausführungsform der Vorrichtung sieht eine hydraulische Betätigung des Krafterzeugungsmittels vor. Durch den Einsatz einer hydraulischen Betätigung wird eine sehr kompakte Ausführungsform der Vorrichtung erreicht. Des weiteren eignen sich hydraulische Krafterzeugungsmittel sehr gut dazu, genau steuerbare und ggf. auch sehr hohe Lasten, bei kompakten Abmaßen des Krafterzeugungsmittels, aufzubringen und damit hohe Massen zu simulieren.

Eine besondere Ausführungsform der erfindungsgemäßen Vorrichtung wird dadurch erreicht, dass als Krafterzeugungsmittel ein Hydraulikzylinder, der auf die Einrichtung mittels einer Zug- oder Druckbelastung einwirkt, eingesetzt wird. Durch diese Maßnahme können entsprechend den örtlichen Gegebenheiten, wie z. B. eine vorliegende Stahlkonstruktion oder konstruktionsbedingte Einschränkungen für die Anbringung der Vorrichtung zum Kalibrieren gelöst werden. Ebenso gelingt es dadurch die Vorrichtung flexibel an die Kalibrieraufgabe anzupassen, wobei die Anzahl der zum Einsatz kommenden Hydraulikzylinder entsprechend den Bedürfnissen angepasst werden kann.

Eine besonders vorteilhafte Ausführungsform der erfindungsgemäßen Vorrichtung sieht die Anbringung des Hydraulikzylinders zwischen dem tragbaren Joch und einem Gegenlager vor, wobei dieses Gegenlager fix an der Unterstützungskonstruktion einer zu kalibrierenden Einrichtung, wie z. B. einem Wiegebunker, montiert ist. Das Joch wird in eine fix an der Stahlkonstruktion der Wiegeeinrichtung angeschweißte Konsole eingehängt. Der Hydraulikzylinder greift in dieses Joch sowie das Gegenlager ein. Durch diese Montierung wird eine einfache und sichere Fixierung der Hydraulikzylinder erreicht. Die Anordnung der Kalibrierdose im Joch erlaubt im Zusammenwirken mit einem ziehend wirkenden Zylinder eine vorteilhafte Druckbelastung für die Kalibrierdose, sodass keine Sonderausführung, wie sie etwa für Zugbelastungen nötig sind, für die Kalibrierdose gewählt werden muss.

Eine weitere vorteilhafte Ausführungsform sieht eine Versorgung des Krafterzeugungsmittels durch eine mobile, hydraulische Pumpe vor. Um eine leichte und mobile Vorrichtung zum Kalibrieren zu schaffen, ist es nötig, auch eine weitgehend von der vorhandenen Medieninfrastruktur unabhängige Versorgung für die Vorrichtung bereitzustellen. Dies wird einerseits durch die angeführte, hydraulische Pumpe und insbesondere durch von Hand zu betätigende Pumpen, die eine besonders leichte Ausführungsform darstellen, erreicht. Damit wird eine sehr kostengünstige und gut transportable Lösung erzielt, die auch allen Anforderungen z.B. selbst bei der Anwendung für sehr große Wiegeanlagen gerecht wird.

Eine weitere bevorzugten Ausführungsform erfindungsgemäßen Vorrichtung umfasst eine elektronische Auswerteeinheit. Durch den Einsatz einer derartigen Auswerteeinheit ist es in vorteilhafter Art und Weise möglich bei der Kalibrierung gemessene Größen zu erfassen und für weitere Verarbeitung zur Verfügung zu stellen. Durch die elektronische Verarbeitung ist es auch möglich allen Anforderungen hinsichtlich Dokumentation, wie sie z. B. der Qualitätssicherungsvorschriften definiert werden, zu erfüllen. Ebenso ist damit einen Nachweis über die ordnungsgemäße Kalibrierung erbracht.

Nach dem erfindungsgemäßen Verfahren wird die Belastung nur zum Zwecke der Kalibrierung aufgebracht. Durch Einsatz einer lösbar mit der Wiegeeinrichtung verbindbaren Vorrichtung ist es nicht nötig teure permanente Vorrichtungen an der zu kalibrierenden Einrichtung vorzusehen. Bei Bedarf oder auch entsprechend einem Ablaufplan, der z.B. durch eine Prüfvorschrift oder auch eine Qualitätssicherungsregel definiert ist, erfolgt die Durchführung der Kalibrierung, wobei eine für diesen Zweck vorgesehene mobile Vorrichtung genutzt wird. Des weiteren können unterschiedliche zu kalibrierende Einrichtungen wechselweise mit einem sehr geringen Vorrichtungsaufwand kalibriert werden. Der Vorgang selbst kann dabei zeitlich verkürzt werden, wobei alle Anforderungen hinsichtlich der Kalibrierungsgenauigkeit sicher erfüllt werden.

Ein sehr präzises Verfahren wird erreicht, wenn bei der Durchführung des Verfahrens die Vorrichtung zum Kalibrieren möglichst nahe der zu kalibrierenden Messzellen angebracht werden, da damit Abweichungen oder Fehlbelastungen weitgehend ausgeschlossen werden können.

Eine weitere vorteilhafte Ausgestaltung des Verfahrens sieht die Anwendung eines elektronischen Auswertegerätes vor. Dies stellt ein reproduzierbares und genau dokumentiertes Verfahren zum Kalibrieren sicher, das auch allen Anforderungen hinsichtlich der Genauigkeit bzw. Auflagen eines Qualitätssicherungssystems gerecht wird. Gemessene Daten (Drücke, Zeiten, Lasten, Kalibrierdaten) und ggf. Referenzdaten werden dabei elektronisch erfasst und für weitere Auswertungen zur Verfügung gestellt, wobei auch eine Auswertung unmittelbar während der Kalibrierung möglich ist. Dies ist eine sehr wesentliche Voraussetzung, um ein verlässliches und vertrauenswürdiges Verfahren sicherzustellen, wobei auch die Reproduzierbarkeit dokumentiert wird.

Die Erfindung wird anhand der nachfolgenden Figuren näher beschrieben.
Fig. 1: Anordnung der Vorrichtung zum Kalibrieren an einem Wiegebunker
Fig. 2: Detailausführung der Vorrichtung zum Kalibrieren
Fig. 3: Hydraulikschema zur Ansteuerung der Hydraulikzylinder der Vorrichtung zum Kalibrieren

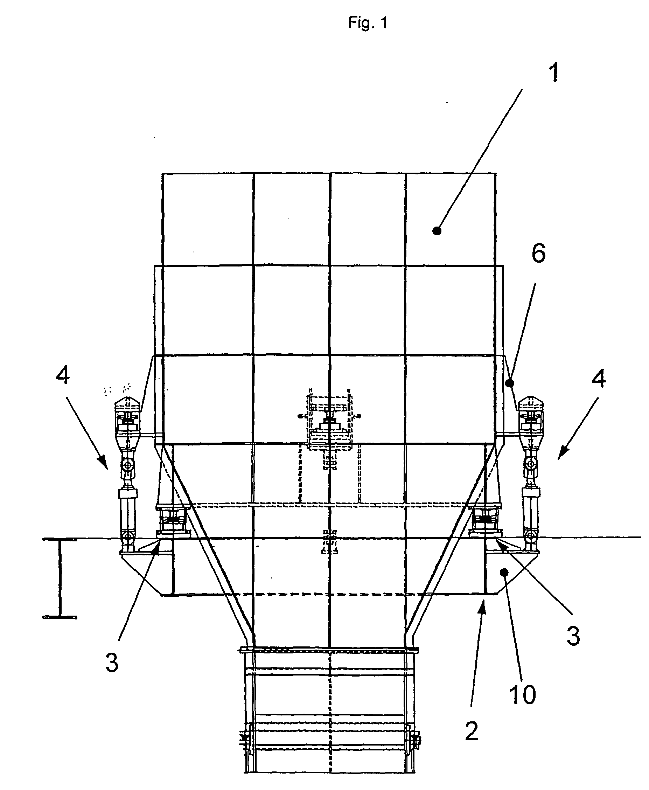

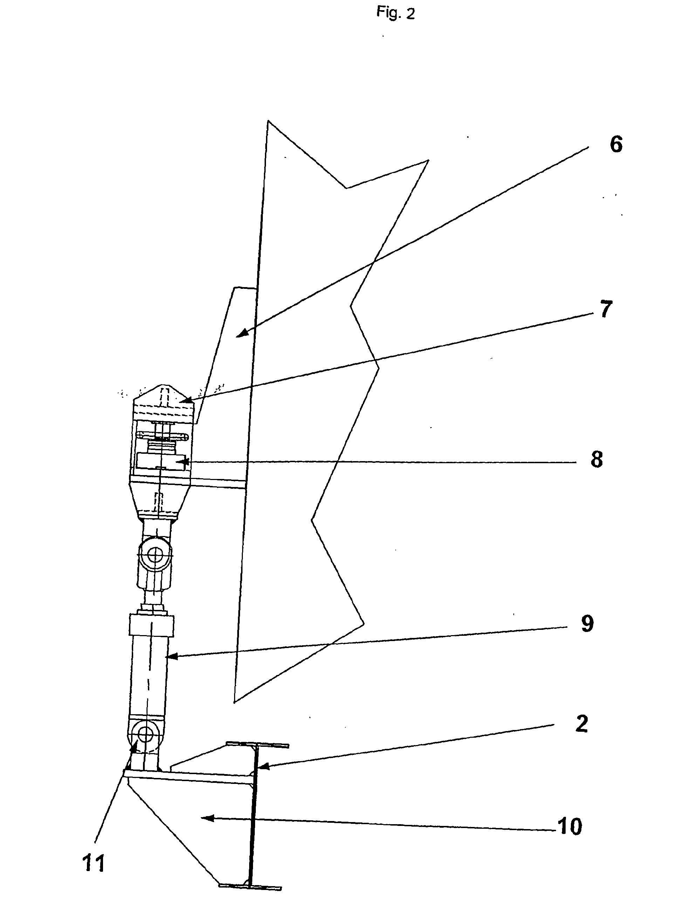

Nach Fig.1 ist eine Wiegeeinrichtung, hier als Wiegebunker 1 ausgeführt, mit der dazugehörigen Stahlkonstruktion 2 dargestellt. Der Wiegebunker 1 stützt sich auf einer angedeuteten Stahlkonstruktion 2 ab. In diese Stahlkonstruktion 2 sind auch die Lastmesseinrichtungen 3 der Wiegeeinrichtung 1 eingesetzt. Die angedeutete mobile Vorrichtung zum Kalibrieren 4 wird zwischen an der Stahlkonstruktion 2 fixierten Konsolen 6 und an der Wiegeeinrichtung 1 fixierten Konsolen 10 verbunden. Die mobile Vorrichtung zum Kalibrieren 4 wird anhand von Fig. 2 näher dargestellt und erläutert. Wie in Fig. 1 dargestellt, kann die Vorrichtung zum Kalibrieren 4 aus mehreren Elementen 4, bestehen, wobei, wie in Fig. 2 näher dargestellt, diese jeweils zumindest einen Hydraulikzylinder 9, ein Joch 7 und eine Kalibrierungsdose 8 umfassen. Dazu werden die Elemente 4 in der benötigten Anzahl an dafür vorgesehene Konsolen 6 und 10 fixiert. Ein zugehöriges elektronisches Auswertegerät ist hier nicht näher dargestellt. Anstelle eines zentralen elektronischen Auswertegerätes können aber auch mehrere jeweils den Elementen 4 zugeordnete elektronische Auswertegeräte zu Einsatz kommen. Ebenso ist die zugehörige Druckversorgung für die Hydraulikzylinder 9 in Fig. 1 nicht dargestellt.

In Fig. 2 sind die wesentlichen Teile der mobilen Vorrichtung zum Kalibrieren 4 im Detail dargestellt. In einer zur Stahlkonstruktion der Wiegeinrichtung gehörenden Konsole 6 wird das mobile Joch 7 eingehängt. Das mobile Joch 7 besitzt eine Aufnahme, in die eine Kalibrierdose 8 eingesetzt werden kann. Der hydraulische Zylinder 9 wirkt in dieser Anordnung mit einer Zugkraft zwischen den Konsolen 6 und 10. Dabei wird die Kalibrierdose 8 druckbelastet, sodass Standardmessdosen für die Kalibrierdose 8 verwendet werden können. Der Hydraulikzylinder 9 wird an die vorgesehene Konsole 10 über eine Lagerstelle 11 fest mit der Stahlkonstruktion 2 verbunden.

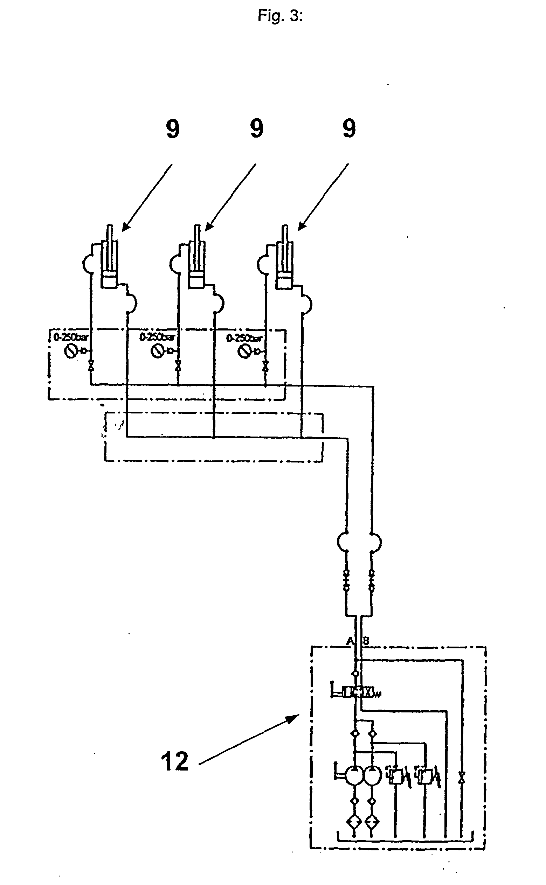

In Fig. 3 ist als eine mögliche Ausführungsform ein Schema für die Energieversorgung bzw. die Anspeisung der Hydraulikzylinder 9 der Elemente 4 dargestellt. Das angedeutete Schema bezieht sich hier auf eine Vorrichtung zum Kalibrieren 4 mit drei Elementen 4. Die angedeutete Pumpe 12 kann z.B. auch als einfache Handpumpe ausgeführt sein. Im dargestellten Schaltschema werden alle Hydraulikzylinder mit dem gleichen Druck belastet, wobei die Erfindung nicht auf diese Ausführungsform beschränkt ist. Ungleiche Belastungen können ebenso vorgenommen werden, um so spezifischen Anforderungen gerecht zu werden.

Die in Fig. 1 und 2 dargestellte Vorrichtung zum Kalibrieren 4 kann, wie bereits oben ausgeführt, auch aus mehreren Elementen 4 bestehen, wobei es sich als vorteilhaft erwiesen hat, dass die Vorrichtung zum Kalibrieren 4 oder deren Elemente 4 nahe der Lastmesseinrichtungen 3 der Wiegeeinrichtung 1 angeordnet werden. Die Anzahl der Elemente 4 wird dabei entsprechend der baulichen Situation der Wiegeeinrichtung 1 und insbesondere der Anordnung der Lastmesseinrichtungen 3 gewählt. Die an der Stahlkonstruktion 2 vorgesehenen Konsolen 6 und 10 werden entsprechend der Anzahl der eingesetzten Elemente 4 und der Gesamtkonstruktion der Wiegeeinrichtung 1 angebracht. Dabei wird eine einfache Ausführungsform und eine gute Zugänglichkeit für die Montage und die Demontage angestrebt.

Nach Montage des oder der Elemente 4 der Vorrichtung zum Kalibrieren 4 werden die Kalibrierungsdosen 8 an ein oder mehrere Auswertegeräte angeschlossen und der oder die Hydraulikzylinder 9 mit Druckerzeugungseinrichtungen, wie z.B. Handpumpen 12, verbunden. Die Last wird nun mittels der Hydraulikzylinder 9 aufgebracht und eine Gewichtslast simuliert. Durch einen Vergleich der an den Lastmesseinrichtungen 3 ermittelten Messwerten mit den an den Kalibrierdosen 8 ermittelten Messwerten kann eine sichere und präzise Kalibrierung vorgenommen werden. Aufgrund der mobilen und einfachen Ausführung der Vorrichtung zum Kalibrieren 4 ist ein einfacher und rascher Kalibriervorgang sichergestellt, wobei auch die Montage und Demontage der mobilen Vorrichtung zum Kalibrieren sehr rasch und sicher durchgeführt werden kann.

## Patentansprüche

1. Vorrichtung zum Kalibrieren (4) einer Wiegeeinrichtung, insbesondere für einen Wiegebunker (1), welche zumindest ein krafteinstellbares Krafterzeugungsmittel (9) zur Belastung der Wiegeeinrichtung, das mit der Wiegeinrichtung in Eingriff bringbar ist, umfasst, **dadurch gekennzeichnet, dass** das Krafterzeugungsmittel (9) zumindest einen, einen Zug aufbringenden Hydraulikzylinder (9) zum Simulieren einer Gewichtslast umfasst.

2. Vorrichtung nach Anspruch 1, **dadurch gekennzeichnet, dass** das Krafterzeugungsmittel (9) mittels eines tragbaren Jochs (7) mit der Wiegeeinrichtung (1) in Eingriff bringbar ist.

3. Vorrichtung nach einem der obigen Ansprüche, **dadurch gekennzeichnet, dass** weiters zumindest eine Kalibrierdose (8), die im tragbaren Joch (7) einsetzbar ist, umfasst ist.

4. Vorrichtung nach einem der obigen Ansprüche, **dadurch gekennzeichnet, dass** die Vorrichtung zum Kalibrieren (4) lösbar mit der Wiegeeinrichtung verbindbar ausgeführt ist.

5. Vorrichtung nach einem der obigen Ansprüche, **dadurch gekennzeichnet, dass** der Hydraulikzylinder (9) zwischen einem Gegenlager (11) und dem Joch (7) anordenbar ist.

6. Vorrichtung nach einem der obigen Ansprüche, **dadurch gekennzeichnet, dass** die Energieversorgung des Krafterzeugungsmittels (9) eine mobile, hydraulische Pumpe (12) umfasst.

7. Vorrichtung nach einem der obigen Ansprüche, **dadurch gekennzeichnet, dass** bei der Kalibrierung gemessene Daten mittels einer elektronischen Auswerteeinheit verarbeitbar sind.

8. Verfahren zum Kalibrieren einer Wiegeeinrichtung, insbesondere für einen Wiegebunker (1), mit zumindest einer Lastmesseinrichtung (3), die durch zumindest ein krafteinstellbares Krafterzeugungsmittel (9) belastet und auf Basis dieser Belastung kalibriert wird, **dadurch gekennzeichnet, dass** das Krafterzeugungsmittel (9) zumindest einen, einen Zug aufbringenden-Hydraulikzylinder (9) zum Simulieren einer Gewichtslast umfasst.

9. Verfahren nach Anspruch 8, **dadurch gekennzeichnet, dass** die Belastung durch das Krafterzeugungsmittel nur für den Vorgang des Kalibrierens aufgebracht wird.

10. Verfahren nach einem der Ansprüche 8 und 9, **dadurch gekennzeichnet, dass** die Einleitung der Belastung jeweils unmittelbar in der Nähe einer Lastmesseinrichtung (3) erfolgt

11. Verfahren nach einem der Ansprüche 8 bis 10, **dadurch gekennzeichnet, dass** die Kalibrierung unter Anwendung eines elektronischen Auswertegeräts durchgeführt wird.

## Claims

1. Apparatus for calibration (4) of a weighing device, in particular for a weighing hopper (1), which has at least one variable-force force producing means (9) for loading the weighing device, which can be engaged with the weighing device, **characterized in that** the force producing means (9) has at least one hydraulic cylinder (9) for applying tension, in order to simulate a weight load.

2. Apparatus according to Claim 1, **characterized in that** the force producing means (9) can be engaged with the weighing device (1) by means of a portable yoke (7).

3. Apparatus according to one of the above claims, **characterized in that** at least one calibration capsule (8), which can be used in the portable yoke (7), is also included.

4. Apparatus according to one of the above claims, **characterized in that** the apparatus for calibration (4) can be detachably connected to the weighing device.

5. Apparatus according to one of the above claims, **characterized in that** the hydraulic cylinder (9) can be arranged between an opposing bearing (11) and the yoke (7).

6. Apparatus according to one of the above claims, **characterized in that** the power supply for the force producing means (9) has a mobile, hydraulic pump (12).

7. Apparatus according to one of the above claims, **characterized in that** data measured during the calibration can be processed by means of an electronic evaluation unit.

8. Method for calibration of a weighing device, in particular for a weighing hopper (1), having at least one load measurement device (3), which is loaded by at least one variable-force force producing means (9) and is calibrated on the basis of this load, **characterized in that** the force producing means (9) has at least one hydraulic cylinder (9) for applying tension, in order to simulate a weight load.

9. Method according to Claim 8, **characterized in that** the load is applied by the force producing means only for the process of calibration.

10. Method according to one of Claims 8 and 9, **characterized in that** the load is in each case introduced in the immediate vicinity of a load measurement device (3).

11. Method according to one of Claims 8 to 10, **characterized in that** the calibration is carried out using an electronic evaluation appliance.

## Revendications

1. Dispositif pour étalonner (4) un dispositif de pesage, en particulier une trémie de pesage (1), qui comprend au moins un moyen de génération de force (9) à force ajustable pour solliciter le dispositif de pesage, qui peut être amené en prise avec le dispositif de pesage, **caractérisé en ce que** le moyen de génération de force (9) comprend au moins un cylindre hydraulique (9) exerçant une traction afin de simuler une charge de pesée.

2. Dispositif selon la revendication 1, **caractérisé en ce que** le moyen de génération de force (9) peut être amené en prise avec le dispositif de pesage (1) au moyen d'une culasse portable (7).

3. Dispositif selon l'une quelconque des revendications précédentes, **caractérisé en ce qu'**il comprend en outre au moins une boîte d'étalonnage (8) qui peut être insérée dans la culasse portable (7).

4. Dispositif selon l'une quelconque des revendications précédentes, **caractérisé en ce que** le dispositif d'étalonnage (4) est réalisé de manière à pouvoir être connecté de manière détachable au dispositif de pesage.

5. Dispositif selon l'une quelconque des revendications précédentes, **caractérisé en ce que** le cylindre hydraulique (9) peut être disposé entre un contre-palier (11) et la culasse (7).

6. Dispositif selon l'une quelconque des revendications précédentes, **caractérisé en ce que** l'alimentation en énergie du moyen de génération de force (9) comprend une pompe hydraulique mobile (12).

7. Dispositif selon l'une quelconque des revendications précédentes, **caractérisé en ce que** des données mesurées lors de l'étalonnage peuvent être traitées au moyen d'une unité d'analyse électronique.

8. Procédé d'étalonnage d'un dispositif de pesage, notamment pour une trémie de pesage (1), comprenant au moins un dispositif de mesure de charge (3) qui est sollicité par au moins un moyen de génération de force (9) à force ajustable et qui est étalonné sur la base de cette sollicitation, **caractérisé en ce que** le moyen de génération de force (9) comprend au moins un cylindre hydraulique (9) exerçant une traction afin de simuler une charge de pesée.

9. Procédé selon la revendication 8, **caractérisé en ce que** la sollicitation est appliquée par le moyen de génération de force uniquement pour l'opération d'étalonnage.

10. Procédé selon l'une quelconque des revendications 8 et 9, **caractérisé en ce que** l'introduction de la sollicitation s'effectue à chaque fois directement à proximité d'un dispositif de mesure de charge (3).

11. Procédé selon l'une quelconque des revendications 8 à 10, **caractérisé en ce que** l'étalonnage est réalisé en utilisant un appareil d'analyse électronique.
